# EUROPÄISCHE PATENTANMELDUNG

(11) **EP 1 048 435 A1**
(43) Veröffentlichungstag der Anmeldung: **02.11.2000**
(21) Anmeldenummer: 00108335.1
(22) Anmeldetag: 14.04.2000
(51) Int. Cl.: B29C 49/06, B29C 49/16, B29C 49/18

(54) **Verfahren und Vorrichtung zum Spritzblasformen**

(30) Priorität: 26.04.1999 DE 19918709
(71) Anmelder: APIS Maschinenbau GmbH, 98743 Spechtsbrunn (DE)
(72) Erfinder: Grossmann, Thomas, 96355 Kleinklettau (DE)
(74) Vertreter: Engel, Christoph Klaus

(57) **Zusammenfassung**

Bekannt sind Verfahren zur Herstellung von thermoplastischen Kunststoffteilen, bei dem ein erster Spritzdorn in eine Spritzform eingesetzt wird, um einen Vorformling aus plastifiziertem Kunststoff zu spritzen; die Spritzform geöffnet wird; der erste Spritzdorn mit dem Vorformling aus der Spritzform entnommen wird; und der erste Spritzdorn mit dem Vorformling in eine erste Blasform eingesetzt wird.

Die Erfindung bildet das Verfahren weiter, wobei der Vorformling nach dem Schließen der ersten Blasform (B1) vorgeblasen wird; das Blasen unterbrochen wird; die erste Blasform (B1) teilweise geöffnet wird, um den ersten Spritzdorn zu entnehmen, wobei das Kunststoffteil in der ersten Blasform verbleibt; ein erster Blasdorn in die erste Blasform (B1) eingesetzt wird; das Kunststoffteil in der ersten Blasform (B1) bis zum Erreichen des Plastifizierungspunkts fertig geblasen wird; die erste Blasform (B1) vollständig geöffnet wird, um das Kunststoffteil mit dem ersten Blasdorn zu entnehmen.

Die Erfindung betrifft auch eine Spritzblasmaschine zur Herstellung von Kunststoffteilen, die nach diesem Verfahren arbeitet.

## Beschreibung

Die vorliegende Erfindung betrifft ein Verfahren zur Herstellung von thermoplastischen Kunststoffteilen gemäß dem Oberbegriff des Anspruchs 1.

Weiterhin betrifft die Erfindung auch eine Spritzblasmaschine zur Ausführung eines solchen Verfahrens.

Es sind verschiedene Spritzblasmaschinen bekannt, die zur Herstellung thermoplastischer Kunststoffteile verwendet werden. Solche Kunststoffteile können beispielsweise Behälter oder Flaschen sein, die ggf. an ihrer Öffnung mit einem Schraubgewinde versehen sind. Das allgemeine Prinzip der Spritzblasmaschinen ist beispielsweise in 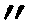 Plastic Blow Molding Handbook", Lee, Norman C., New York, Van Nostrand Reinhold, 1990, Seite 65 beschrieben. Bei der Herstellung wird mit einem Spritzdorn plastifizierter Kunststoff mit hohem Druck in die Spritzstation eingepreßt, so daß dort ein Vorformling gebildet wird. Dieser Vorformling wird mit dem Spritzdorn in die Blasstation verfahren, wo über den Spritzdorn Gas (zumeist Luft) in den Vorformling eingepreßt wird, so daß dieser entsprechend der ihn umgebenden Form aufgeweitet wird. Die herzustellenden Kunststoffteile haben in der Regel zylindrische Formen.

Ein Problem der bekannten Spritzblasmaschinen und der damit ausgeführten Verfahren besteht darin, daß die Anzahl der in einem vorgegebenen Zeitabschnitt herstellbaren Kunststoffteile relativ starr an die spezielle Konstruktion der Maschine, insbesondere die Anzahl der vorgesehenen Kavitäten, gebunden ist. Ein weiteres Problem besteht darin, daß die Arbeitsgeschwindigkeit üblicherweise von der Verweilzeit der Vorformlinge in der Blasstation abhängt. In der Blasstation muß einerseits der Vorformling in die gewünschte Form aufgeblasen werden und andererseits, bei weiterem Blasen, das Material soweit abgekühlt werden, daß seine Temperatur den Plastifizierungs- bzw. Erstarrungspunkt des speziellen Materials unterschreitet, damit das hergestellte Teil in der gewünschten Form erstarrt. In der Regel wird dazu die zweibis dreifache Zeit benötigt, die in der Spritzstation zur Erzeugung des Vorformlings benötigt wird.

In 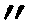 Kunststoff-Verarbeitung im Gespräch" Teil 3: Blasformen, BASF AG, Ludwigshafen, 1973 Seite 232 wurde vorgeschlagen, zwei Blaswerkzeuge von einem Spritzwerkzeug aus zu versorgen, um so die Kapazität einer Spritzblasmaschine zu erhöhen, indem die Zeiten für das Verschwenken des Spritzdorns aus der Spritzstation in die Blasstation verringert werden. Es hat sich aber gezeigt, daß dadurch die Zykluszeit nicht wesentlich verkürzt werden kann, da sich die lange Verweilzeit des Vorformlings in der Blasstation nicht verringern läßt und die Zeit zum Herstellen des Vorformlings in der Spritzstation keine entscheidende Rolle spielt.

Die DE 26 52 248 C3 beschreibt ein Verfahren und eine Vorrichtung zum Spritzblasformen von Hohlkörpern aus thermoplastischem Kunststoff. Eine deutliche Erhöhung der Produktionskapazität gegenüber anderen bekannten Verfahren ist aber auch mit diesem Verfahren nicht möglich.

Die US 3,195,186 zeigt eine Vorrichtung zum Verriegeln von Formwerkzeugen zur Herstellung von Kunststoffteilen.

Aus der Deutschen Offenlegungsschrift 2 029 197 ist ein Verfahren und eine Vorrichtung zum Schließen, Anpressen und Zusammenhalten von Formhälften bekannt, die auch bei der Herstellung von Kunststoffteilen zum Einsatz kommen können.

Eine Aufgabe der vorliegenden Erfindung besteht somit darin, ein Verfahren anzugeben, mit dem Kunststoffteile hergestellt werden können, wobei insbesondere die Leistung der verwendeten Spritzblasmaschine erhöht werden soll. Weiterhin soll durch die Erfindung die Aufgabe gelöst werden, eine Spritzblasmaschine zur Ausführung des Verfahrens anzugeben, die die aus dem Stand der Technik bekannten Nachteile vermeidet und eine Produktivitätserhöhung ermöglicht. Gleichzeitig wird angestrebt, die Spritzblasmaschine so zu gestalten, daß sie flexibel an veränderte Produktionsbedürfnisse angepaßt werden kann.

Zur Lösung dieser Aufgaben wird ein Verfahren vorgeschlagen, welches im kennzeichnenden Teil des Anspruchs 1 näher definiert ist.

Durch dieses Verfahren wird die Zeit, in welcher der Spritzdorn bislang zum Blasen des Kunststoffteils benötigt wurde, drastisch verringert. Der Spritzdorn steht dann wieder zur Erzeugung eines weiteren Vorformlings zur Verfügung.

Eine besonders zweckmäßige Ausführungsform des Verfahrens ist im Anspruch 3 angegeben.

Die durch die Erfindung weiterhin angegebene Spritzblasmaschine zeichnet sich u.a. dadurch aus, daß die Spritzstation und die Blasstation als Werkzeugmodule aufgebaut sind. Dies bietet den Vorteil, daß diese Spritzblasmaschine flexibel an sich verändernde Fertigungsaufgaben angepaßt werden kann, indem beispielsweise die Anzahl der verwendeten Stationen ohne weiteres erweitert werden kann. So ist es möglich, eine ursprünglich mit einer Spritzstation, einer Blasstation und einer Auswurfstation ausgerüstete Maschine durch eine Konditionierungsstation zu ergänzen, wenn andere Kunststoffteile hergestellt werden sollen, bei denen ein solcher Konditionierungsschritt erforderlich ist. In einem anderen Fall kann eine ursprünglich mit drei Stationen bestückte Maschine durch eine zweite Blasstation ergänzt werden, wenn bei gestiegenem Bedarf an entsprechenden Kunststoffteilen die Leistungsfähigkeit der Maschine erhöht werden soll. In diesem Fall werden zwei Blasstationen von einer Spritzstation bedient. Die Verwendung der Werkzeugmodule, die autarke Einheiten darstellen, eröffnet auch die Möglichkeit, Wartungs- und Stillstandszeiten der Spritzblasmaschine deutlich zu verringern. Im Servicefall kann eine einzelne Station aus der Spritzblasmaschine entfernt und gegen ein gleichartiges Modul ausgetauscht werden. Die Spritzblasmaschine kann dann weiterarbeiten, während das entfernte Werkzeugmodul gewartet wird.

Durch die Verwendung von zwei Spritzdornen bzw. Gruppen von Spritzdornen und zwei Blasdornen bzw. Gruppen von Blasdornen, besteht die Möglichkeit, die Blasstationen nach einem Vorblasvorgang nur teilweise zu öffnen. Dadurch können die Spritzdorne, über welche während des Vorblasvorgangs das Blasgas zugeführt wird, aus der Blasstation herausgezogen werden, ohne die Kunststoffteile aus der Form zu entfernen. Die Spritzdorne können dann zur erneuten Erzeugung von Vorformlingen verwendet werden, während in die Blasstationen Blasdorne eingefügt werden, mit denen der Blasvorgang für die Kunststoffteile beendet wird. Dies führt zu einer deutlichen Erhöhung der Leistungsfähigkeit der Spritzblasmaschine, da noch während des Blasvorgangs für ein erstes Kunststoffteil bereits der Vorformling für das nächste Kunststoffteil gefertigt werden kann.

Weitere Vorteile, Einzelheiten und Weiterbildungen ergeben sich aus der nachfolgenden Beschreibung bevorzugter Ausführungsformen, unter Bezugnahme auf die Zeichnung. Es zeigen:
- Fig. 1: eine perspektivische Ansicht eines Werkzeugmoduls für Formwerkzeuge zur Herstellung von Kunststoffteilen;
- Fig. 2: eine perspektivische Detailansicht einer Klemmbacke des Werkzeugmoduls;
- Fig. 3: eine perspektivische Ansicht einer Spritzblasmaschine mit drei Werkzeugmodulen;
- Fig. 4: eine Prinzipskizze eines Spritzblasverfahrens im Endlosbetrieb mit drei Stationen/Werkzeugmodulen;
- Fig. 5: eine Prinzipskizze eines Spritzblasverfahrens unter Anwendung einer Spritzstation und von zwei Blasstationen.

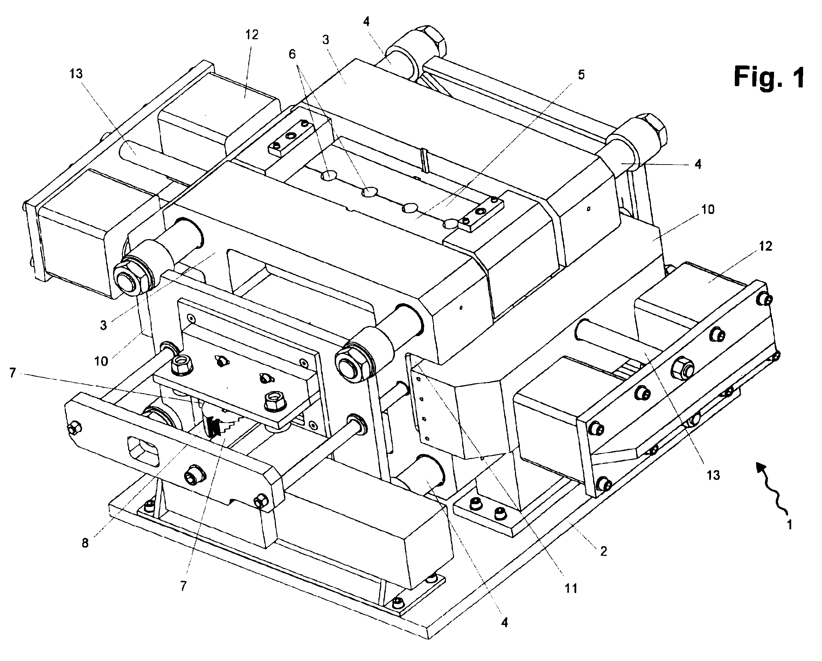

Fig. 1 zeigt in einer perspektivischen Ansicht ein Werkzeugmodul 1 für Formwerkzeuge zur Herstellung von Kunststoffteilen. Das Werkzeugmodul ist vollständig auf einer Montageplatte 2 aufgebaut, so daß es in seiner Gesamtheit in eine Maschine eingesetzt und aus dieser entnommen werden kann. Das Werkzeugmodul besitzt weiterhin zwei Schließplatten 3, die auf Führungsholmen 4 in vertikaler Richtung verschiebbar sind. An den Innenseiten der Schließplatten 3 ist jeweils eine Hälfte des eigentlichen Formwerkzeugs 5 angebracht. Im dargestellten Beispiel besitzt das Formwerkzeug 5 vier Kavitäten 6, so daß in einem Arbeitsgang vier gleichartige Kunststoffteile im Werkzeugmodul 1 bearbeitet werden können.

Um das Formwerkzeug 5 zu öffnen, müssen die beiden Schließplatten 3 auseinander gefahren werden. Bei der gezeigten Ausführungsform geschieht dies mit Hilfe von Zahnstangen 7, die jeweils mit einer Schließplatte 3 in Verbindung stehen. In die Zahnstangen 7 greift ein Zahnrad 8 ein, welches von einem beliebigen Antriebsmechanismus, beispielsweise einem elektrischen Servomotor angetrieben wird. Sobald das Formwerkzeug 5 vollständig geschlossen ist, wird von dem Antrieb eine geringe Vorspannkraft auf die Form aufgebracht, beispielsweise ca. 200 N. Diese geringe Vorspannkraft ist jedoch nicht ausreichend, um das Formwerkzeug geschlossen zu halten, wenn im Falle der Verwendung als Spritzstation der plastifizierte Kunststoff mit einem sehr hohen Druck in die Form eingepreßt wird. Zu diesem Zeitpunkt treten Kräfte von beispielsweise 4·10⁵ N auf. Aus diesem Grund sind an beiden Seiten der Schließplatten 3 Klemmbacken 10 vorgesehen, die eine Verriegelung bewirken. In dem in Fig. 1 gezeigten Zustand ist das Formwerkzeug geschlossen und die Klemmbacken 10 haben die Verriegelung ausgeführt. Die Klemmbacken 10 werden auf Führungsstangen 13 geführt.

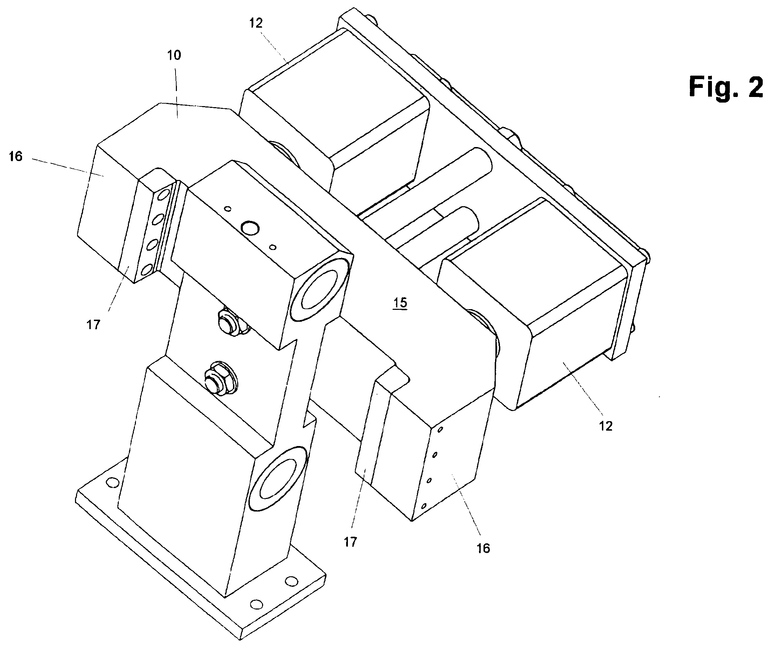

Fig. 2 zeigt in einer perspektivischen Detailansicht die Klemmbacke 10. Die Klemmbacke 10 ist u-förmig ausgebildet, wobei sich die Basis 15 quer zur Bewegungsrichtung der Klemmbacke 10 erstreckt. Die Basis 15 geht an ihren beiden Enden in die Schenkel 15 über, an deren Innenseite Keilleisten 17 angebracht sind, die bei der Verriegelung der Schließplatten auf Kelle 11 auffahren. Die äußeren Übergangsflächen zwischen der Basis 15 und den Schenkeln 16 sind in einem Winkel von etwa 45° abgeschrägt. Außerdem besitzt die Basis 15 etwa die dreifache Dicke der Länge der Schenkel 16. Die auf die Klemmbacke 10 einwirkenden Druckkräfte, die zur Verriegelung benötigt werden, werden von pneumatischen Betätigungselementen 12 jeweils am äußeren Ende der Basis 15 eingeleitet. Bei anderen Ausführungen können die Klemmbacken z.B. elektromotorisch oder magnetisch angetrieben werden.

Der Keilwinkel zwischen den Keilen 11 und den Keilleisten 17 ist so gewählt, daß einerseits der Reibwinkel überwunden wird und andererseits eine optimale Kraftübersetzung möglich ist. Vorzugsweise wird ein Keilwinkel von 5° verwendet, woraus bei einem angenommenen Reibwinkel von 1,8° eine etwa 20-fache Kraftübersetzung resultiert.

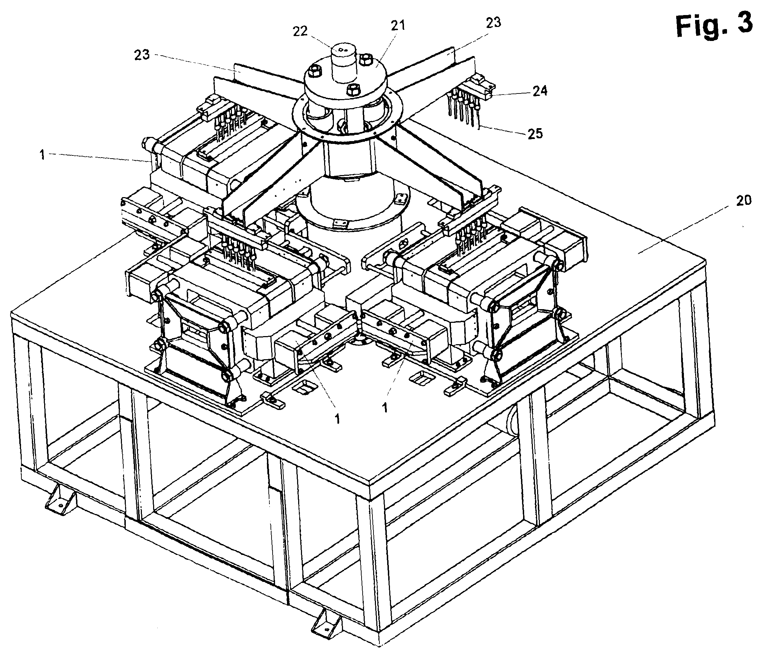

Fig. 3 zeigt in einer perspektivischen Ansicht einen beispielhaften Aufbau einer Spritzblasmaschine. Die Spritzblasmaschine ist auf einem Maschinentisch 20 aufgebaut. Bei der dargestellten Ausführungsform sind drei Werkzeugmodule 1, jeweils zueinander um 90° versetzt, auf dem Maschinentisch 20 befestigt. Im Zentrum des Maschinentischs 20 ist eine Zuführvorrichtung 21 positioniert. Die Zuführvorrichtung 21 hat eine Hubrotationsachse 22 und mehrere an dieser angreifende Bestückungsarme 23. Am äußeren Ende der Bestückungsarme 23 ist jeweils ein Dornträger 24 befestigt, der einen oder mehrere Spritz- oder Blasdorne 25 tragen kann. Durch eine vertikale Bewegung der Bestückungsarme 23 längs der Hubrotationsachse 22 können die Spritz- oder Blasdorne 25 in die Kavitäten 6 des jeweiligen Werkzeugmoduls 1 eingesetzt werden oder aus diesen herausgezogen werden. Durch die Drehung der Zuführvorrichtung 21 ist es möglich, daß die jeweiligen Dorne 25 nacheinander mit verschiedenen Werkzeugmodulen zusammenwirken. Durch die vertikale Anordnung der Kavitäten 6 und der zugehörigen Spritzdorne 25 kann außerdem sichergestellt werden, daß bei den zu erzeugenden Kunststoffteilen gleiche Wandstärken entlang des Umfangs erzielt werden. Ebenso kann die Zuführvorrichtung 21 in Leichtbauweise konstruiert werden, was zur Vermeidung großer Massenträgheitsmomente und damit zur Erhöhung der Arbeitsgeschwindigkeit führt. Welche speziellen Arbeitsvorgänge in den einzelnen Werkzeugmodulen ausgeführt werden, hängt von der Aufgabenstellung für die Spritzblasmaschine ab. Verschiedene Möglichkeiten werden unten in Bezug auf die Beschreibung bevorzugter Verfahren näher dargelegt.

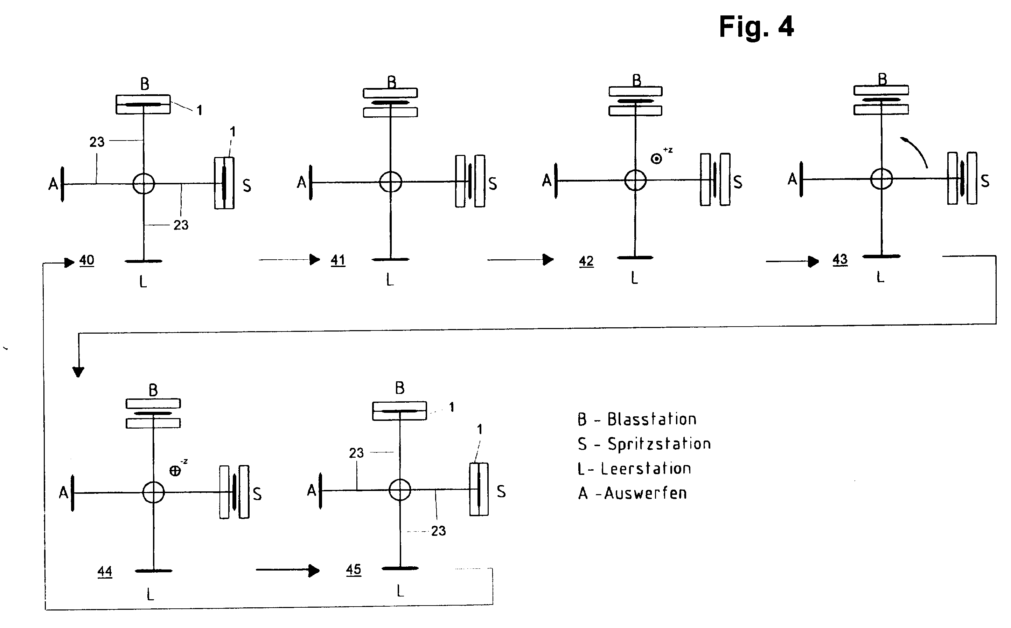

Fig. 4 zeigt die Prinzipskizze eines Verfahrens zur Herstellung von thermoplastischen Kunststoffteilen, bei welchem die genannten Werkzeugmodule eingesetzt werden können. Prinzipiell könnten die in Bezug auf Fig. 4 dargelegten Verfahrensschritte auch von anderen Maschinen ausgeführt werden, jedoch ist die Darstellung dieses einfachen Verfahrens nützlich für das Verständnis weiterer, erfindungsgemäßer Verfahrensschritte.

Im Schritt 40 wird in der Spritzstation S bei in die Kavität eingesetztem Spritzdorn ein Vorformling gespritzt. Statt einem einzelnen Spritzdorn kann aus eine Gruppe von Spritzdornen eingesetzt werden, wenn in der Form mehrere Kavitäten vorhanden sind. Während des Spritzens sind die Schließplatten der Werkzeugmodule 1 geschlossen und die Klemmbacken verriegeln die jeweilige Form. Nachdem der Vorformling gespritzt wurde, werden im Schritt 41 die Klemmbacken zurückgezogen und die Schließplatten auseinander gefahren, so daß die Formen geöffnet werden. Bei geöffneten Formen werden im Schritt 42 die Spritzdorne vertikal aus der Spritzstation S herausgefahren, indem die Zuführvorrichtung 21 die Bestückungsarme 23 an der Hubrotationsachse 22 nach oben fährt. An dem aus der Spritzstation S herausgefahrenen Spritzdorn befindet sich nunmehr der Vorformling. Im Schritt 43 dreht die Zuführvorrichtung um 90° nach links, so daß der Spritzdorn mit dem Vorformling über einer Blasstation B positioniert wird. Anschließend wird im Schritt 44 der Vorformling mit dem Spritzdorn vertikal nach unten gefahren, so daß der Vorformling in der Blasstation B und der dort angeordneten Form positioniert wird. Da auch an den anderen Bestückungsarmen 23 Spritzdorne 25 angeordnet sind, wird gleichzeitig ein neuer Spritzdorn bzw. eine Gruppe von Spritzdornen in die Spritzstation S eingefahren. Im Schritt 45 werden die Werkzeugmodule 1 wiederum geschlossen und durch die Klemmbacken verriegelt. Anschließend wird in der Spritzstation S ein neuer Vorformling gespritzt, während in der Blasstation B der dort eingesetzte Vorformling zum fertigen Kunststoffteil aufgeblasen wird. Hinsichtlich der Anordnung und dem Betriebszustand der Werkzeugmodule entspricht der Schritt 45 dem Ausgangsschritt 40, so daß der Zyklus in der dargelegten Weise fortgesetzt wird. Nachdem der Vorformling in der Blasstation zum fertigen Kunststoffteil aufgeblasen und dort zumindest bis zur Erstarrung abgekühlt wurde, werden die Werkzeugmodule wie im Schritt 41 erneut geöffnet, so daß die Dorne aus den Stationen herausfahren können. Nach einer erneuten Drehung der Zuführvorrichtung 21 gelangt das erste Kunststoffteil zur Auswurfstation A, während der zweite Vorformling in die Blasstation B überführt wird. Da die Formen vertikal angeordnet sind befindet sich das fertige Kunststoffteil in der Auswurfstation A ebenfalls in vertikaler Lage, so daß es ohne zusätzliche Lageveränderung beispielsweise auf einem Transportband abgestellt werden kann. Das Verfahren kann auf diese Weise im Endlosbetrieb fortgesetzt werden.

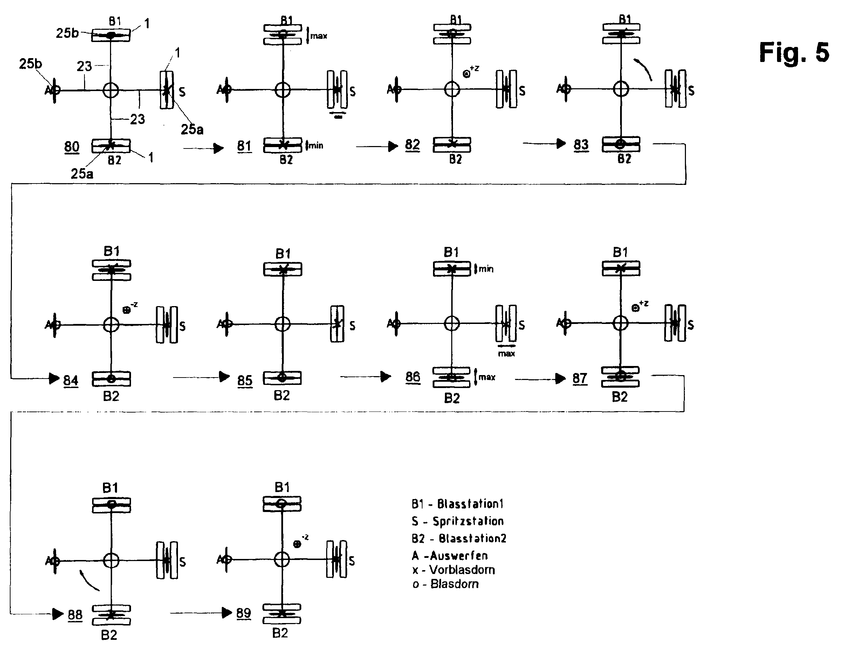

Das erfindungsgemäße Verfahren ist in einer Prinzipdarstellung in Fig. 5 gezeigt. Dieses Verfahren kann eingesetzt werden, wenn besonders hohe Stückzahlen an Kunststoffteilen benötigt werden und die Zykluszeit klein gehalten werden soll. Im Unterschied zu der vorgenannten Variante sind vorliegend nicht alle vier Bestückungsarme 23 mit den gleichen Dornen ausgerüstet. An den im Schritt 80 unten und rechts positionierten Bestückungsarmen 23 ist jeweils ein Spritz- und Vorblasdorn 25a angebracht, während die im Schritt 80 oben und links positionierten Bestückungsarme 23 mit einem Blasdorn 25b bestückt sind. Im Schritt 80 wird mit Hilfe des ersten Spritz- und Vorblasdorns 25a in der Spritzstation S ein erster Vorformling erzeugt. Natürlich können auch hier Gruppen von Spritzdornen und Gruppen von Blasdornen zum Einsatz kommen, wenn in den Werkzeugmodulen 1 mehrere Kavitäten vorhanden sind. Im Schritt 81 werden das Werkzeugmodul der Spritzstation S und das Werkzeugmodul der ersten Blasstation B1 vollständig geöffnet, so daß die enthaltenen Dorne und die daran angehängten Vorformlinge bzw. Kunststoffteile aus den Formen entnommen werden können. Hingegen wird die zweite Blasstation B2 nur teilweise geöffnet und zwar so weit, daß der Dorn herausgefahren werden kann, jedoch ein ggf. enthaltenes Kunststoffteil in der Form zurückbleibt. Im Schritt 82 erfolgt dann die vertikale Verlagerung der Bestückungsarme 23, woraufhin im Schritt 83 die Zuführvorrichtung 21 eine Drehung um 90° nach links durchführt. Damit wird der in der Spritzstation S gebildete Vorformling in die erste Blasstation B1 im Schritt 84 eingesetzt. Im Schritt 85 werden alle Werkzeugmodule geschlossen. Anschließend erfolgt in der Spritzstation S die Herstellung eines weiteren Vorformlings, während in der ersten Blasstation B1 der Vorformling zum Kunststoffteil aufgeblasen wird. Nach einer bestimmten Zeit ist immer noch im Schritt 85 der Spritzvorgang in der Spritzstation S abgeschlossen. Diese Zeit ist aber nicht ausreichend, um den Blasvorgang in der ersten Blasstation B1 zu beenden, jedoch wird das Kunststoffteil die gewünschte Form weitgehend angenommen haben, so daß das Blasen kurzzeitig unterbrochen werden kann. Anschließend wird im Schritt 86 das Werkzeugmodul der Spritzstation S und das Werkzeugmodul der zweiten Blasstation B2 vollständig geöffnet, während das Werkzeugmodul der ersten Blasstation B1 nur teilweise geöffnet wird. Im Schritt 87 erfolgt die vertikale Verschiebung der Bestückungsarme 23, wobei der am Spritzdorn 25a befindliche Vorformling aus der Spritzstation S entfernt wird, während der andere Spritzdorn 25a aus der ersten Blasstation B1 entfernt wird, dabei aber das Kunststoffteil vorerst in dieser ersten Blasstation B1 verbleibt. Im Schritt 88 erfolgt nunmehr eine Drehung der Zuführvorrichtung 21 um 90° nach rechts. Dadurch gelangt ein Spritzdorn 25a mit einem Vorformling zur zweiten Blasstation B2, während der andere Spritzdorn von der ersten Blasstation B1 zurück zur Spritzstation S geschwenkt wird. Gleichzeitig wird ein Blasdorn 25b zur ersten Blasstation B1 geschwenkt. Im Schritt 89 werden die Dorne in die Formen eingesetzt, indem die Zuführvorrichtung eine vertikale Bewegung nach unten vollführt. Der Zyklus beginnt dann im Schritt 80 erneut, wobei nunmehr in der ersten Blasstation B1 das Kunststoffteil mit Hilfe des Blasdorns 25b fertig geblasen wird, während in der Spritzstation S ein neuer Vorformling gebildet wird und in der zweiten Blasstation B2 der dort eingesetzte Vorformling durch den Spritz- und Vorblasdorn 25a vorgeblasen wird. Nach einer erneuten Verdrehung der Zuführvorrichtung 21 um 90° nach links gelangt das erste fertiggestellte Kunststoffteil zur Auswurfstation A, wo es beispielsweise auf ein Transportband abgestellt werden kann. Durch dieses Verfahren wird die Kapazität der Spritzstation wesentlich besser ausgenutzt, da dort die Leerlaufzeit verringert wird.

Dieses Verfahren ist mit der beschriebenen Spritzblasmaschine ausführbar, wobei beispielsweise im Vergleich zu dem in Fig. 4 dargestellten Verfahren lediglich eine weitere Blasstation anzuordnen ist und die Steuerung angepaßt werden muß. Es wäre auch denkbar, daß mit ein und derselben Spritzblasmaschine gleichzeitig verschiedene Kunststoffteile hergestellt werden, basierend auf einem gemeinsamen Vorformling, der in der Spritzstation S erzeugt wird. Die Formen in der ersten Blasstation B1 und in der zweiten Blasstation B2 können im Rahmen der Verwendung des gleichen Vorformlings durchaus voneinander abweichen.

Es sind weitere vielfältige Abwandlungen der erläuterten Verfahren denkbar. Die Anwendung der Werkzeugmodule führt zu einer deutlich erhöhten Flexibilität der Spritzblasmaschinen.

## Patentansprüche

1. Verfahren zur Herstellung von thermoplastischen Kunststoffteilen (26), bei dem
◆ ein erster Spritzdorn in eine Spritzform eingesetzt wird, um dort einen Vorformling aus plastifiziertem Kunststoff zu spritzen;
◆ die Spritzform geöffnet wird;
◆ der erste Spritzdorn mit dem Vorformling aus der Spritzform entnommen wird; und
◆ der erste Spritzdorn mit dem Vorformling in eine erste Blasform eingesetzt wird;
dadurch gekennzeichnet, daß
◆ der Vorformling nach dem Schließen der ersten Blasform (B1) vorgeblasen wird;
◆ das Blasen unterbrochen wird;
◆ die erste Blasform (B1) teilweise geöffnet wird, um den ersten Spritzdorn (25a) zu entnehmen, wobei das Kunststoffteil (26) in der ersten Blasform verbleibt;
◆ ein erster Blasdorn (25b) in die erste Blasform (B1) eingesetzt wird;
◆ das Kunststoffteil (26) in der ersten Blasform (B1) bis zum Erreichen des Plastifizierungspunkts fertig geblasen wird;
◆ die erste Blasform (B1) vollständig geöffnet wird, um das Kunststoffteil (26) mit dem ersten Blasdorn (25b) zu entnehmen.

2. Verfahren nach Anspruch 1, dadurch gekennzeichnet, daß der erste Blasdorn (25b) mit dem geblasenen Kunststoffteil (26) nach der Entnahme aus der Blasform (B1) in eine Auswurfstation (A) verfahren wird, um das Kunststoffteil (26) von diesem abzuwerfen.

3. Verfahren nach Anspruch 1 oder 2, dadurch gekennzeichnet, daß
◆ während des Vorblasens in der ersten Blasform (B1) ein zweiter Spritzdorn (25a) in die Spritzform (S) eingesetzt ist und dort ein weiterer Vorformling gespritzt wird;
◆ nach dem Unterbrechen des Blasens in der ersten Blasform (B1) der zweite Spritzdorn (25a) zum Vorblasen in eine zweite Blasform (B2) verfahren wird, während der erste Spritzdorn (25a) in die Spritzform (S) zurückgefahren wird, um dort für einen nächsten Zyklus zur Verfügung zu stehen;
◆ während des Fertigblasens in der ersten Blasform (B1) das weitere Kunststoffteil (26) in der zweiten Blasform (B2) vorgeblasen wird;
◆ nach dem Entnehmen des zweiten Spritzdorns (25a) ein zweiter Blasdorn (25b) in die zweite Blasform (B2) eingesetzt wird, um das weitere Kunststoffteil (26) fertig zu blasen, während das erste Kunststoffteil (26) abgeworfen wird und der zweite Spritzdorn (25a) für einen nächsten Zyklus in der Spritzform (S) zur Verfügung steht.

4. Verfahren nach einem der Ansprüche 1 bis 3, dadurch gekennzeichnet, daß die Längsachsen der Formwerkzeuge (5) in den Spritz- (S) und Blasstationen (B) vertikal angeordnet werden.

5. Spritzblasmaschine zur Herstellung von Kunststoffteilen (26), dadurch gekennzeichnet, daß sie die Ausführung aller Verfahrensschritte gemäß einem der Ansprüche 1 bis 4 ermöglicht.

6. Spritzblasmaschine nach Anspruch 5, umfassend:
◆ eine Zuführvorrichtung (21), die mindestens zwei Spritzdorne (25) bzw. zwei Gruppen von Spritzdornen (25) besitzt und diese in verschiedenen Werkzeugmodulen positionieren kann;
◆ eine als autarkes Werkzeugmodul gestaltete Spritzstation (S), in der ein Vorformling erzeugt wird, wobei auf den Spritzdorn plastifizierter Kunststoff zugeführt wird;
◆ mindestens zwei als autarke Werkzeugmodule gestaltete Blasstationen (B1, B2), die abwechselnd von der Spritzstation (S) mit Vorformlingen beliefert werden und in denen der Vorformling in die Endform aufgeblasen und bis zur Erstarrung abgekühlt wird, wobei über den Spritzdorn das Blasgas zugeführt wird; und
◆ eine Auswurfstation (A), in der das fertige Kunststoffteil (26) vom Spritzdorn abgestreift und entnommen wird.

7. Spritzblasmaschine nach Anspruch 6, dadurch gekennzeichnet, daß weiterhin zwei Blasdorne (25b) bzw. Gruppen von Blasdornen (25b) vorgesehen sind, daß die Blasstationen (B1, B2) zweistufig zu öffnen sind, wobei in der ersten Öffnungsstufe die Spritzdorne (25) aus den Blasstationen zu entnehmen und die Blasdorne (25b) einzusetzen sind, während die Kunststoffteile (26) in der Blasstation gehalten werden.
